# EUROPEAN PATENT APPLICATION

(11) **EP 4 622 168 A1**
(43) Date of publication of application: **24.09.2025**
(21) Application number: 22969864.2
(22) Date of filing: 30.12.2022
(51) Int. Cl.: H04L 9/32

(54) **COMMUNICATION METHOD AND COMMUNICATION APPARATUS**

(71) Applicant: Huawei Technologies Co., Ltd., Shenzhen, Guangdong 518129 (CN)
(72) Inventor: ZHANG, Fan, Shenzhen, Guangdong 518129 (CN); LI, Shanglong, Shenzhen, Guangdong 518129 (CN)
(74) Representative: Goddar, Heinz J.
(86) International application number: PCT/CN2022/144270
(87) International publication number: WO 2024/138722

(57) **Abstract**

Embodiments of this application provide a communication method and a communication apparatus. The method includes: A security tunnel receiving end determines first information, where the first information indicates a security protocol header sequence number of a service data packet received by the security tunnel receiving end. The security tunnel receiving end sends the service data packet based on the first information. According to the method provided in embodiments of this application, reordering of service data packets can be implemented without a newly added protocol, to reduce deployment costs of a reordering function.

## Description

### TECHNICAL FIELD

Embodiments of this application relate to the communication field, and in particular, to a communication method and a communication apparatus.

### BACKGROUND

As the human society depends on communication and worries about network threats, network security protocols are widely applied to network communication scenarios. A packet security protocol can provide confidentiality, integrity, and source authentication protection for a packet. The integrity protection includes connectionless integrity protection (in other words, a single packet is not tampered with) and integrity protection for a part of sequences (in other words, arrival of a duplicate packet is detected and the duplicate packet is discarded). However, the security protocol does not provide a function of reordering of data packets.

### SUMMARY

Embodiments of this application provide a communication method and a communication apparatus, so that reordering of service data packets can be implemented without a newly added protocol, to reduce deployment costs of a reordering function.

According to a first aspect, a communication method is provided, including: A security tunnel receiving end determines first information, where the first information indicates a security protocol header sequence number of a service data packet received by the security tunnel receiving end. The security tunnel receiving end sends the service data packet based on the first information.

According to the method provided in embodiments of this application, reordering of service data packets can be implemented without a newly added protocol, to reduce deployment costs of a reordering function.

With reference to the first aspect, in some implementations of the first aspect, that the security tunnel receiving end sends the service data packet based on the first information includes:
The security tunnel receiving end sends the service data packet based on the security protocol sequence number that is of the service data packet and that is indicated by the first information being an expected sequence number; or the security tunnel receiving end buffers the service data packet based on the security protocol sequence number that is of the service data packet and that is indicated by the first information being not an expected sequence number.

With reference to the first aspect, in some implementations of the first aspect, that the security tunnel receiving end sends the service data packet based on the first information includes:
Based on that the security protocol sequence number that is of the service data packet and that is indicated by the first information being not an expected sequence number and a buffer being full, the security tunnel receiving end sequentially sends buffered service data packets and buffers the currently received service data packet.

It should be noted that, when the sequence number of the service data packet received by the security tunnel receiving end is not the expected sequence number and the buffer is full, if a service data packet with a sequence number smaller than that of the currently received service data packet is buffered, a buffered service data packet with a smallest sequence number may be sent, and the currently received service data packet is buffered. If the currently received service data packet is already a service data packet with a smallest sequence number, the currently received service data packet is sent.

According to a second aspect, a communication apparatus is provided, including units configured to perform the steps of the communication method according to the first aspect and the implementations of the first aspect.

In a design, the communication apparatus is a communication chip, and the communication chip may include an input circuit or interface configured to send information or data, and an output circuit or interface configured to receive information or data.

In another design, the communication apparatus is a communication device (for example, a terminal device), and a communication chip may include a transmitting machine configured to send information and a receiving machine configured to receive information or data.

According to a third aspect, a communication device is provided, including a processor and a memory. The memory is configured to store a computer program, and the processor is configured to: invoke the computer program from the memory, and run the computer program, to enable the communication device to perform the communication method according to the first aspect and the implementations of the first aspect.

Optionally, there are one or more processors, and there are one or more memories.

Optionally, the memory may be integrated with the processor, or the memory may be disposed separately from the processor.

Optionally, the communication device further includes a transmitting machine (that is, a transmitter) and a receiving machine (that is, a receiver).

According to a fourth aspect, a computer program product is provided. The computer program product includes a computer program (which may also be referred to as code or instructions). When the computer program is run, a computer is enabled to perform the communication method according to any one of the first aspect to the fourth aspect and the implementations of the first aspect to the fourth aspect.

According to a fifth aspect, a communication system is provided. The system includes at least one apparatus configured to perform the method according to the first aspect and the implementations of the first aspect.

Optionally, the communication system further includes at least one apparatus configured to perform the method according to the second aspect and the implementations of the second aspect.

Optionally, the communication system further includes at least one apparatus configured to perform the method according to the third aspect and the implementations of the third aspect.

According to a sixth aspect, a chip system is provided, including a memory and a processor. The memory is configured to store a computer program, and the processor is configured to: invoke the computer program from the memory, and run the computer program, to enable a communication device in which the chip system is installed to perform the communication method according to any one of the foregoing aspects and the implementations of the foregoing aspects.

The chip system may include an input circuit or interface configured to send information or data, and an output circuit or interface configured to receive information or data.

### BRIEF DESCRIPTION OF DRAWINGS

FIG. 1 is a diagram of a system architecture according to an embodiment of this application;
FIG. 2 is a diagram of a Sequence Number field in an IPsec protocol according to an embodiment of this application;
FIG. 3 is a diagram of an AH field according to an embodiment of this application;
FIG. 4 is a diagram of a PN field in a MACsec protocol according to an embodiment of this application;
FIG. 5 is a diagram of an example of a communication method according to an embodiment of this application;
FIG. 6 is a diagram of another example of a communication method according to an embodiment of this application;
FIG. 7 is a diagram of another example of a communication method according to an embodiment of this application;
FIG. 8 is a diagram of another example of a communication method according to an embodiment of this application;
FIG. 9 is a diagram of an example of a communication apparatus according to an embodiment of this application;
FIG. 10 is a diagram of another example of a communication apparatus according to an embodiment of this application; and
FIG. 11 is a diagram of another example of a communication apparatus according to an embodiment of this application.

### DESCRIPTION OF EMBODIMENTS

The following describes technical solutions of embodiments of this application with reference to accompanying drawings.

The technical solutions of embodiments of this application may be applied in various communication systems, for example, a global system for mobile communications (Global System for Mobile communications, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5^{th} generation (5^{th} Generation, 5G) system, or a new radio (New Radio, NR) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

A network device in embodiments of this application may be a device configured to communicate with the terminal device. The network device may be a base station (Base Transceiver Station, BTS) in the global system for mobile communications (Global System for Mobile communications, GSM) or the code division multiple access (Code Division Multiple Access, CDMA) system, a NodeB (NodeB, NB) in the wideband code division multiple access (Wideband Code Division Multiple Access, WCDMA) system, an evolved NodeB (Evolved NodeB, eNB or eNodeB) in the LTE system, or a radio controller in a cloud radio access network (Cloud Radio Access Network, CRAN) scenario. Alternatively, the network device may be a relay station, an access point, a vehicle-mounted device, a wearable device, a network device in the 5G network, a network device in the evolved PLMN network, or the like. This is not limited in embodiments of this application.

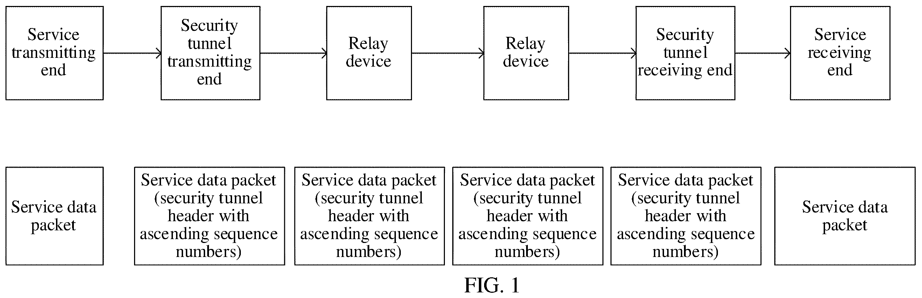

FIG. 1 is a diagram of a system architecture according to an embodiment of this application. As shown in FIG. 1, embodiments of this application may be applied to a secure networking scenario. The system includes:
Security tunnel transmit/receiving end: The security tunnel transmit/receiving end is mainly used to deploy a security protocol to implement encryption, integrity protection, and source authentication functions; and may be an O-RU, an O-DU, or an O-CU that supports a security function, or may be a switch or a security gateway that supports a security function. This is not limited in embodiments of this application.

Service data packet: Transmission of the service data packet is usually performed in an encrypted manner through a security tunnel.

Security tunnel header: The security tunnel header may also be referred to as a header field of a network security protocol. For example, an ESP (encapsulating security payload, Encapsulating Security Payload) header, an AH (authentication header, Authentication Header), and a MACsec (media access control security, Media Access Control Security) header all include sequence number fields.

Service transmitting end/receiving end: The service transmitting end/receiving end includes but is not limited to an O-CU device, an O-DU device, and an O-RU device. This is not limited in embodiments of this application.

A scenario in embodiments of this application includes but is not limited to a scenario in which a security tunnel receiving end and a service receiving end are unified devices.

The security protocol in embodiments of this application includes but is not limited to AH, ESP, MACsec, or another security protocol carrying ascending sequence numbers or descending sequence numbers. It should be noted that, in embodiments of this application, an example in which the security protocol carries ascending sequence numbers is used for description, but a case in which the security protocol is in another order is not limited.

The following describes several typical security protocols.

### 1. IPsec protocol

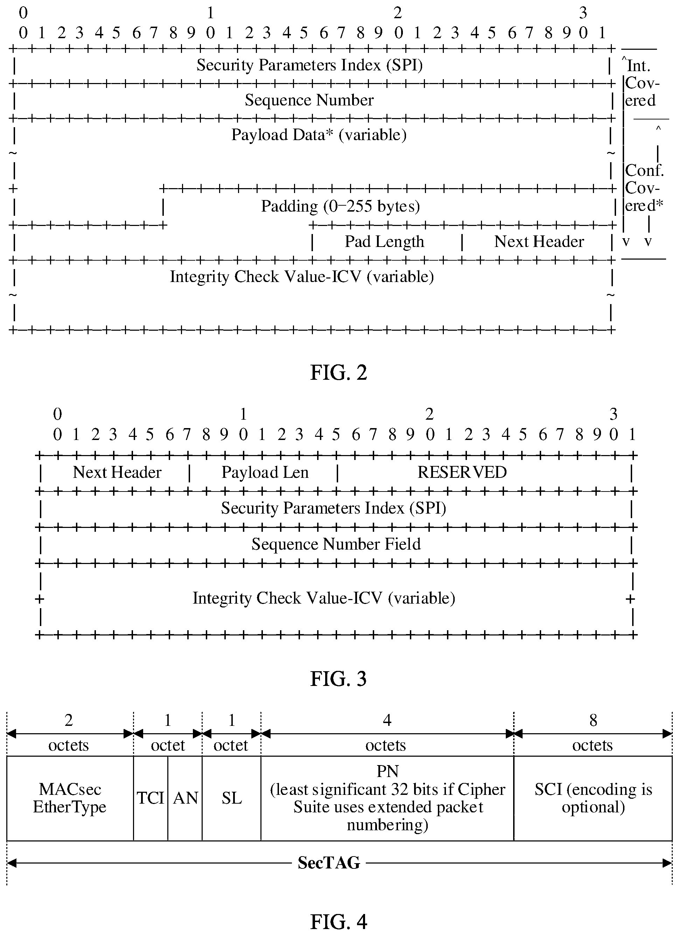

FIG. 2 shows a Sequence Number field in the IPsec protocol.

### 2. AH protocol

FIG. 3 shows a field in the AH protocol.

### 3. MACsec protocol

FIG. 4 shows a PN field in the MACsec protocol.

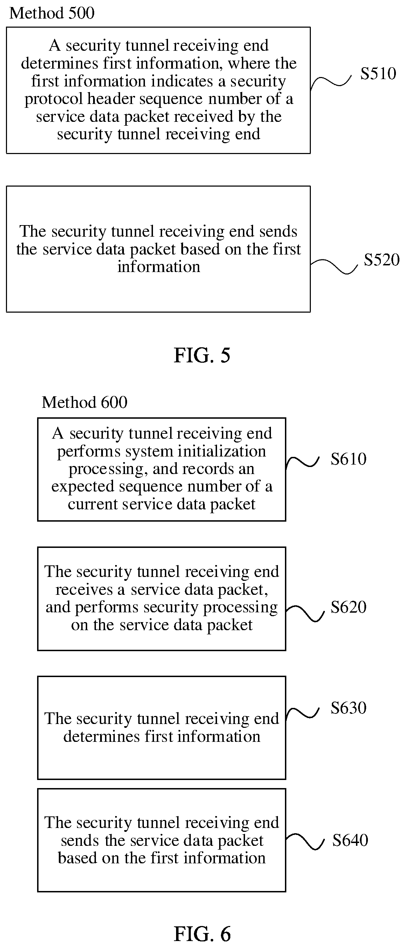

FIG. 5 is an example of a communication method according to an embodiment of this application. As shown in FIG. 5, the method 500 includes the following steps.

S510: A security tunnel receiving end determines first information, where the first information indicates a security protocol header sequence number of a service data packet received by the security tunnel receiving end.

Specifically, the first information indicates the security protocol header sequence number of the service data packet received by the security tunnel receiving end, so that the security tunnel receiving end can determine, based on the security protocol header sequence number of the service data packet, whether to send the service data packet.

S520: The security tunnel receiving end sends the service data packet based on the first information.

In a possible embodiment, when the security tunnel receiving end determines, based on the first information, that the security protocol header sequence number of the service data packet is an expected sequence number, the security tunnel receiving end sends the current service data packet. When the security tunnel receiving end determines, based on the first information, that the security protocol header sequence number of the service data packet is not an expected sequence number, the security tunnel receiving end buffers the current service data packet.

It should be noted that, in this case, the first information may be equivalent to the security protocol header sequence number that is of the service data packet received by the security tunnel receiving end and that is indicated by the first information.

Specifically, when the sequence number of the service data packet received by the security tunnel receiving end is the expected sequence number, the security tunnel receiving end sends the service data packet. In addition, the security tunnel receiving end may refresh a next expected sequence number to the current sequence number plus 1.

Specifically, when the sequence number of the service data packet received by the security tunnel receiving end is not the expected sequence number, the security tunnel receiving end buffers the service data packet. Alternatively, the security tunnel receiving end discards the service data packet.

Optionally, when the sequence number of the service data packet received by the security tunnel receiving end is greater than the expected sequence number, the security tunnel receiving end may buffer the service data packet, and the security tunnel receiving end may refresh a next expected sequence number to be the same as the current expected sequence number. If sequence numbers of a previously buffered service data packet and the currently received service data packet are consecutive, and the sequence number of the currently received service data packet is the expected sequence number, all service data packets with consecutive sequence numbers are sent together.

For example, when a sequence number of a service data packet received by the security tunnel receiving end is 2, and a sequence number of a service data packet expected to be received by the security tunnel receiving end is 1, the security tunnel receiving end may buffer the currently received service data packet whose sequence number is 2, and still sets a next expected sequence number to 1.

Optionally, when the sequence number of the service data packet received by the security tunnel receiving end is smaller than the expected sequence number, the security tunnel receiving end may send the service data packet.

For example, when a sequence number of a service data packet received by the security tunnel receiving end is 1, and a sequence number of a service data packet expected to be received by the security tunnel receiving end is 3, the security tunnel receiving end may send the currently received service data packet whose sequence number is 1, and the security tunnel receiving end may refresh a next expected sequence number to the sequence number of the current service data packet plus 1, that is, 2.

Optionally, when the sequence number of the service data packet received by the security tunnel receiving end is smaller than the expected sequence number, the security tunnel receiving end may discard the service data packet, and the security tunnel receiving end may set a next expected sequence number to the current expected sequence number.

For example, when a sequence number of a service data packet received by the security tunnel receiving end is 1, and a sequence number of a service data packet expected to be received by the security tunnel receiving end is 3, the security tunnel receiving end may discard the currently received service data packet, and the security tunnel receiving end may set a next expected sequence number to the current expected sequence number, that is, 3.

In the foregoing possible embodiment, a buffer is not full by default.

In a possible embodiment, when the security tunnel receiving end determines, based on the first information, that the security protocol header sequence number of the service data packet is not the expected sequence number and a buffer is full, the security tunnel receiving end sends the current service data packet. In this way, the service data packet is not stuck at this node due to a buffer problem. Optionally, the security tunnel receiving end may set a next expected sequence number to the sequence number of the currently sent service data packet plus 1. Particularly, when the security protocol header sequence number of the service data packet is not the expected sequence number and the buffer is full, and the security tunnel receiving end has buffered a service data packet whose sequence number is smaller than the sequence number of the current service data packet, a buffered service data packet with a smallest sequence number is sent at this time.

For example, if a sequence number of a service data packet expected to be received by the security tunnel receiving end is 3, a service data packet actually received by the security tunnel receiving end is 5, and the buffer is full, the security tunnel receiving end sends the current data packet whose sequence number is 5. If there is a service data packet whose sequence number is 4 in the buffer, the service data packet whose sequence number is 4 is sent.

According to the method provided in this embodiment of this application, reordering of service data packets can be implemented without a newly added protocol, to reduce deployment costs of a reordering function. In addition, when the buffer is full, sending processing is performed regardless of whether a service data packet with the expected sequence number is received, so that stuck of the service data packet due to a buffer problem can be avoided.

FIG. 6 is another example of a communication method according to an embodiment of this application. As shown in FIG. 6, the method includes the following steps.

S610: A security tunnel receiving end performs system initialization processing, and records an expected sequence number of a current service data packet.

Optionally, the expected sequence number of the service data packet may be a sequence number value of a first packet, and the sequence number value may be 0, but is not limited to 0.

Specifically, the security tunnel receiving end may apply for specific buffer space for buffering a service data packet or buffering a data packet pointer. Alternatively, in other words, the buffer space is for performing a solution in this embodiment of this application.

S620: The security tunnel receiving end receives a service data packet, and performs security processing on the service data packet.

For example, the security processing may include decryption processing, anti-replay processing, ACL filtering, and the like.

S630: The security tunnel receiving end determines first information.

Specifically, after performing the security processing on the service data packet, the security tunnel receiving end obtains content of the service data packet.

Specifically, the first information indicates a security protocol header sequence number of the service data packet received by the security tunnel receiving end.

In a possible embodiment, that the security tunnel receiving end determines the first information may be that the security tunnel receiving end determines that the security protocol sequence number is the expected sequence number.

In a possible embodiment, that the security tunnel receiving end determines the first information may be that the security tunnel receiving end determines that the security protocol sequence number is not the expected sequence number and a buffer is full.

In a possible embodiment, that the security tunnel receiving end determines the first information may be that the security tunnel receiving end determines that the security protocol sequence number is not the expected sequence number and a buffer is not full.

S640: The security tunnel receiving end sends the service data packet based on the first information.

In a possible embodiment, the security tunnel receiving end determines, based on the first information, that the security protocol sequence number of the current service data packet is the expected sequence number; and the security tunnel receiving end sends the service data packet.

For example, if the security tunnel receiving end expects to receive a service data packet whose sequence number is 1, and the security tunnel receiving end determines, based on the security protocol header sequence number, that a header sequence number of a service data packet currently received by the security tunnel receiving end is 1, the security tunnel receiving end sends the service data packet.

In a possible embodiment, the security tunnel receiving end determines, based on the first information, that the security protocol sequence number of the current service data packet is not the expected sequence number and that the buffer is full; and the security tunnel receiving end sends the service data packet, or the security tunnel receiving end sends a buffered service data packet with a smallest sequence number.

For example, the security tunnel receiving end expects to receive a service data packet whose sequence number is 1, but the security tunnel receiving end determines, based on the security protocol header sequence number, that a header sequence number of a service data packet currently received by the security tunnel receiving end is 2. Because the buffer is full, even if the service data packet received by the security tunnel receiving end is 2, the security tunnel receiving end sends the service data packet. Optionally, a sequence number of a next service data packet expected by the security tunnel receiving end may be refreshed to 3.

For another example, the security tunnel receiving end expects to receive a service data packet whose sequence number is 2, but the security tunnel receiving end determines, based on the security protocol header sequence number, that a header sequence number of a service data packet currently received by the security tunnel receiving end is 1. Because the buffer is full, even if the service data packet received by the security tunnel receiving end is 1, the security tunnel receiving end sends the service data packet. Optionally, a sequence number of a next service data packet expected by the security tunnel receiving end may be 2. Alternatively, because the buffer is full, the security tunnel receiving end may discard the data packet whose sequence number is 1, and a sequence number of a next service data packet expected by the security tunnel receiving end may be 2.

In a possible embodiment, the security tunnel receiving end determines, based on the first information, that the security protocol sequence number is not the expected sequence number and that the buffer is not full; and the security tunnel receiving end buffers the service data packet. Further, the security tunnel receiving end refreshes the expected sequence number to be the same as the current expected sequence number. This step is repeated until the expected sequence number matches a sequence number of a to-be-sent service data packet, and the service data packet is sent. Alternatively, when a sequence number of a to-be-sent service data packet and a sequence number of a buffered service data packet form consecutive sequence numbers, and the to-be-sent service data packet is the same as the expected sequence number, the foregoing string of service data packets with consecutive sequence numbers is sent.

It should be noted that this embodiment of this application is described based on sequence numbers being arranged in ascending order, but an order of the sequence numbers is not particularly limited in this embodiment of this application.

According to the method provided in this embodiment of this application, reordering of service data packets can be implemented without a newly added protocol, to reduce deployment costs of a reordering function.

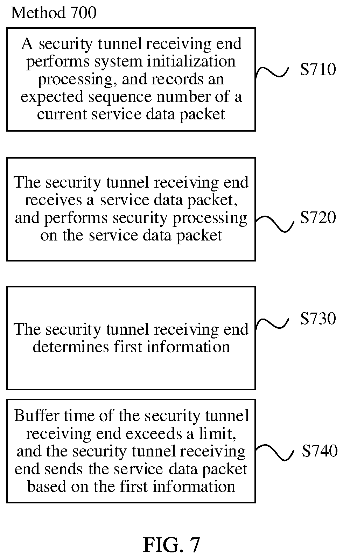

FIG. 7 is another example of a communication method according to an embodiment of this application. As shown in FIG. 7, the method includes the following steps.

S710: A security tunnel receiving end performs system initialization processing, and records an expected sequence number of a current service data packet.

Optionally, the expected sequence number of the service data packet may be a sequence number value of a first packet, and the sequence number value may be 0, but is not limited to 0.

Specifically, the security tunnel receiving end may apply for specific buffer space for buffering a service data packet or buffering a data packet pointer. Alternatively, in other words, the buffer space is for performing a solution in this embodiment of this application.

S720: The security tunnel receiving end receives a service data packet, and performs security processing on the service data packet.

For example, the security processing may include decryption processing, anti-replay processing, ACL filtering, and the like.

S730: The security tunnel receiving end determines first information.

It should be noted that step S730 is similar to step S630 in the method 600. Descriptions of S630 can be referred to, and details are not described herein again.

S740: Buffer time of the security tunnel receiving end exceeds a limit, and the security tunnel receiving end sends the service data packet based on the first information.

It should be noted that step S740 is similar to step S640 in the method 600. Descriptions of S630 can be referred to, and details are not described herein again.

It should be noted that, when buffering of a service data packet by the security tunnel receiving end exceeds a specific buffer time limit, the security tunnel receiving end performs sending processing on the buffered service data packet. In this way, a sending delay of the service data packet at the security tunnel receiving end does not exceed a preset limit, and a system delay is reduced.

According to the communication method provided in this embodiment of this application, reordering of service data packets can be implemented without a newly added protocol, to reduce deployment costs of a reordering function. In addition, the system delay is reduced.

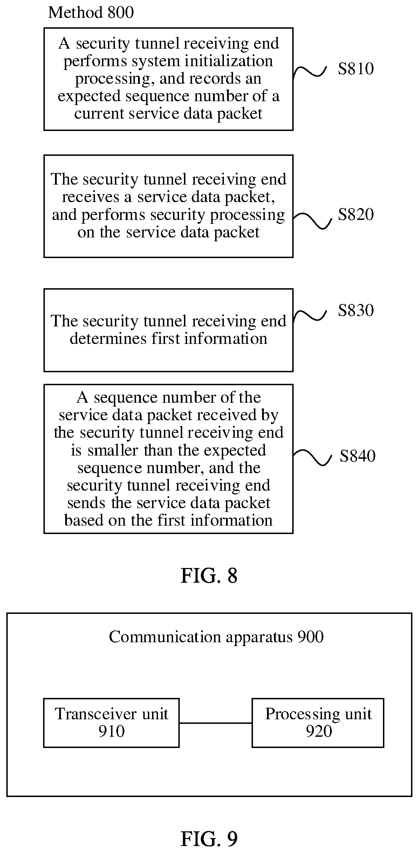

FIG. 8 is another example of a communication method according to an embodiment of this application. As shown in FIG. 8, the method includes the following steps.

S810: A security tunnel receiving end performs system initialization processing, and records an expected sequence number of a current service data packet.

Optionally, the expected sequence number of the service data packet may be a sequence number value of a first packet, and the sequence number value may be 0, but is not limited to 0.

Specifically, the security tunnel receiving end may apply for specific buffer space for buffering a service data packet or buffering a data packet pointer. Alternatively, in other words, the buffer space is for performing a solution in this embodiment of this application.

S820: The security tunnel receiving end receives a service data packet, and performs security processing on the service data packet.

For example, the security processing may include decryption processing, anti-replay processing, ACL filtering, and the like.

S830: The security tunnel receiving end determines first information.

It should be noted that step S830 is similar to step S630 in the method 600. Descriptions of S630 can be referred to, and details are not described herein again.

S840: A sequence number of the service data packet received by the security tunnel receiving end is smaller than the expected sequence number, and the security tunnel receiving end sends the service data packet based on the first information.

It should be noted that step S840 is similar to step S640 in the method 600. Descriptions of S630 can be referred to, and details are not described herein again.

It should be noted that, different from step 640, in step 840, when a sequence number of a service data packet received by a security tunnel transmitting end is smaller than the expected sequence number, the security tunnel receiving end discards the current service data packet, so that an anti-replay function of the security tunnel receiving end is improved, and a received service data packet is not replayed.

According to the communication method provided in this embodiment of this application, reordering of service data packets can be implemented without a newly added protocol, to reduce deployment costs of a reordering function. In addition, the anti-replay function of the security tunnel receiving end is improved.

It should be noted that, in the method provided in this embodiment of this application, an occasion of determining whether a buffer of the security tunnel receiving end is full may be in steps of the entire method. In other words, once the security tunnel receiving end determines that the buffer is full, buffer clearing processing may be performed, and a time sequence between whether the buffer is full and service data packet reordering is not limited.

Therefore, in the method provided in this embodiment of this application, a flexible decoupling deployment manner is provided, so that a function is supported to be deployed in a manner of an independent module or an independent device.

FIG. 9 is a diagram of an example of a communication apparatus according to an embodiment of this application. As shown in FIG. 9, the communication apparatus 900 may include a transceiver unit 910 and a processing unit 920.

In some embodiments, the communication apparatus 900 may be configured to implement functions of the security tunnel receiving end in any one of the foregoing methods. For example, the communication apparatus 900 may correspond to the security tunnel receiving end.

The communication apparatus 900 may be the security tunnel receiving end, and performs the steps performed by the security tunnel receiving end in the foregoing method embodiments. The transceiver unit 910 may be configured to support the communication apparatus 900 in performing communication, for example, performing a sending action and/or a receiving action performed by the security tunnel receiving end in the foregoing method embodiments. The processing unit 920 may be configured to support the communication apparatus 900 in performing a processing action in the foregoing method embodiments, for example, performing a processing action performed by the security tunnel receiving end in the foregoing method embodiments.

Optionally, the communication apparatus may further include a storage unit 930 (which is not shown in FIG. 9), configured to store program code and data of the communication apparatus.

For details, refer to the following descriptions.

The processing unit 910 is configured to determine first information, where the first information indicates a security protocol header sequence number of a service data packet of the processing unit.

The transceiver unit 920 is configured to send the service data packet based on the first information.

That the transceiver unit sends the service data packet based on the first information includes:

The transceiver unit sends the service data packet based on the security protocol sequence number that is of the service data packet and that is indicated by the first information being an expected sequence number.

The transceiver unit buffers the service data packet based on the security protocol sequence number that is of the service data packet and that is indicated by the first information being not an expected sequence number.

That the transceiver unit sends the service data packet based on the first information includes:

The transceiver unit sends the service data packet based on the security protocol sequence number that is of the service data packet and that is indicated by the first information being not an expected sequence number and a buffer being full.

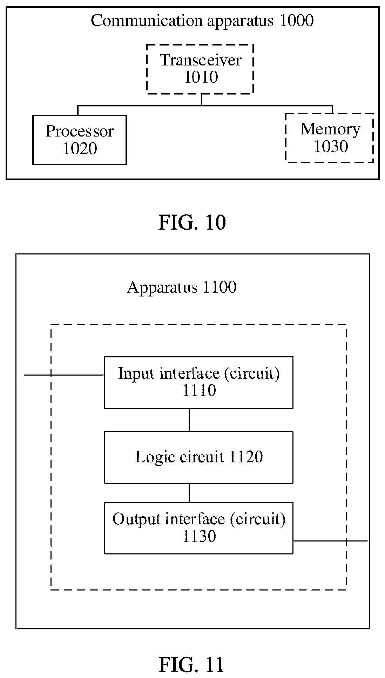

FIG. 10 is an example of a signal transmission apparatus 1000 according to an embodiment of this application. As shown in FIG. 10, the apparatus 1000 includes a transceiver 1010, a processor 1020, and a memory 1030. The memory 1030 is configured to store instructions. The processor 1020 is coupled to the memory 1030, and is configured to execute the instructions stored in the memory, to perform the method provided in the foregoing embodiments of this application.

Specifically, the transceiver 1010 in the apparatus 1000 may correspond to the transceiver unit 910 in the apparatus 900, and the processor 1020 in the communication apparatus 1000 may correspond to the processing unit 920 in the communication apparatus 900.

It should be understood that the memory 1030 and the processor 1020 may be integrated into a processing apparatus, and the processor 1020 is configured to execute program code stored in the memory 1030 to implement the foregoing functions. During specific implementation, the memory 1030 may alternatively be integrated into the processor 1020, or may be independent of the processor 1010.

FIG. 11 is a diagram of another example of a communication apparatus according to an embodiment of this application. The communication apparatus may be configured to perform the method performed by the security tunnel receiving end. As shown in FIG. 11, the communication apparatus includes:
at least one input interface (Input or inputs) 1110, a logic circuit 1120, and at least one output interface (Output or outputs) 1130. Optionally, the logic circuit may be a chip or another integrated circuit that can implement the method in this application.

The input interface 1110 is configured to input or receive data. The output interface 1130 is configured to output or send data. The logic circuit 1120 is configured to perform the foregoing possible method shown in FIG. 5.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, unit division is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a security tunnel receiving end, first information, wherein the first information indicates a security protocol header sequence number of a service data packet received by the security tunnel receiving end; and
sending, by the security tunnel receiving end, the service data packet based on the first information.

2. The method according to claim 1, wherein
sending, by the security tunnel receiving end, the service data packet based on the first information comprises:
sending, by the security tunnel receiving end, the service data packet based on the security protocol sequence number that is of the service data packet and that is indicated by the first information being an expected sequence number; or
buffering, by the security tunnel receiving end, the service data packet based on the security protocol sequence number that is of the service data packet and that is indicated by the first information being not an expected sequence number.

3. The method according to claim 1, wherein sending, by the security tunnel receiving end, the service data packet based on the first information comprises:
based on the security protocol sequence number that is of the service data packet and that is indicated by the first information being not an expected sequence number and a buffer being full, sequentially sending, by the security tunnel receiving end, buffered service data packets, and sending the service data packet.

4. A communication apparatus, comprising:
a processing unit, configured to determine first information, wherein the first information indicates a security protocol header sequence number of a service data packet of the processing unit; and
a transceiver unit, configured to send the service data packet based on the first information.

5. The apparatus according to claim 4, wherein
that the transceiver unit sends the service data packet based on the first information comprises:
the transceiver unit sends the service data packet based on the security protocol sequence number that is of the service data packet and that is indicated by the first information being an expected sequence number; or
the transceiver unit buffers the service data packet based on the security protocol sequence number that is of the service data packet and that is indicated by the first information being not an expected sequence number.

6. The apparatus according to claim 4, wherein that the transceiver unit sends the service data packet based on the first information comprises:
based on the security protocol sequence number that is of the service data packet and that is indicated by the first information being not an expected sequence number and a buffer being full, the transceiver unit sequentially sends buffered service data packets, and buffers the service data packet.

7. A communication apparatus, comprising at least one processor, wherein the processor is coupled to a memory;
the memory is configured to store program instructions and data; and
the processor is configured to execute the instructions in the memory, to implement the method according to any one of claims 1 to 3.

8. A communication apparatus, comprising a logic circuit and an input/output interface, wherein
the input/output interface is configured to input or output data or information; and
the logic circuit is configured to perform the method according to any one of claims 1 to 3 based on the data or information.

9. A computer-readable storage medium, wherein the computer-readable medium stores computer instructions; and when the computer instructions are run on a computer, the computer is enabled to perform the method according to any one of claims 1 to 3.

10. A computer program product, comprising instructions, wherein when the computer program product runs on a computer, the method according to any one of claims 1 to 3 is performed.
